# EUROPEAN PATENT APPLICATION

(11) **EP 2 269 472 A1**
(43) Date of publication of application: **05.01.2011**
(21) Application number: 09164557.2
(22) Date of filing: 03.07.2009
(51) Int. Cl.: A23K 1/16, A23K 1/18

(54) **Animal feed for improving intestinal barrier properties**

(71) Applicant: Nutreco Nederland B.V., 5831 JN Boxmeer (NL)
(72) Inventor: Smits, Coenraad Henricus Maria,, 6581 PC Malden, (NL); Van Dam, Johannes Teunis Pieter,, 3903 GR Veenendaal, (NL)
(74) Representative: Hatzmann, Martin

(57) **Abstract**

The invention is directed to an animal feed for improving barrier properties of the intestinal mucosa. In a first aspect, this object is met by providing an animal feed suitable for feeding mammals, birds and fish, comprising a C5 acid compound, wherein the dosage of said C5 acid compound in said animal feed is 0.025% or higher by weight, based on the total weight of said animal feed.

## Description

The invention is directed to an animal feed for improving barrier properties of the intestinal mucosa, in particular for use in farming of monogastrics and/or young animals.

The intestinal mucosa is the innermost layer of the gastrointestinal tract that is surrounding the lumen. This layer comes in direct contact with e.g. food, and is responsible for important processes in digestion such as absorption and secretion. The gastrointestinal mucosa comprises epithelial cells, which are held together through so called tight junctions.

The tight junction, also called *zona occludens*, is a specialized cell-cell interaction that is found in almost all types of epithelial cells. Tight junctions are the closely associated areas of two cells whose membranes join together forming a virtually impermeable barrier to fluid. A tight junction comprises densely packed protein complexes that provide contact between the membranes of two neighboring membranes.

One of the functions of tight junctions is regulating the passage of molecules and ions through the space between cells. The tight junction represents a major barrier for paracellular transport, *i.e*. transport through the intercellular spaces between epithelial cells, and may prevent such passage of molecules and ions. Consequently, materials must enter the epithelial cells, through *e.g*. diffusion or active transport, in order to pass through the tissue. This is called transcellular transport and such transport provides control over what substances are allowed through *e.g*. the intestinal mucosa. Epithelia are classed as 'tight' or 'leaky' depending on the ability of the tight junctions to prevent water and solute movement between cells.

An important task of the intestine is to form a defensive barrier to prevent absorption of damaging substances from the external environment. This protective function is mainly dependent on the barrier properties of the intestinal mucosa. The permeability of the intestinal mucosa is determined at least in part by the strength of the tight junctions of the intestinal epithelial cells.

There are a number of factors that may affect tight junctions, including food components such as gluten and casein. Infectious organisms such as specific pathogenic strains of *E. coli, Salmonella* and *C. difficile* have the ability to disrupt the tight junctions of epithelial cells through their virulence factors. Disruption of the tight junctions may result in lowering the barrier properties of the gut because of leaky intestinal epithelial cells.

Dysfunction of the gut, as encountered by animals, including fish, in stressful situations or during immunosuppresion may also be caused by the disruption of tight junctions in intestinal epithelial cells. This may result in poisoning of the animals and/or a decrease of the feed conversion ratio in the animals. Currently little to no attention is paid in animal nutrition to the gut barrier properties. Treatments to improve the mucosal integrity are largely unknown, although there have been suggestions that specific nutrients such as the amino acid glutamine may result in a decrease in gut permeability and thus could result in an improved functioning of the mucosal barrier.

Disadvantage of such compounds is their limited efficacy and also problems with respect to handling and storages, in particular as a result of unpleasant odor.

Lassiter et al. describe in Journal of Animal Science 1958; 17:358-362 the effect of valeric acid and a combination of valeric and isovaleric acids on milking cows. It was shown that valeric acid increased the digestibility of dry matter, organic matter, crude fiber and nitrogen-free extract. These improvements are believed to be associated with processes in the rumen only. However, this effect was not found when valeric acid was used in combination with isovaleric acid.

Papas et al. describe in Journal of Dairy Science 1984, vol. 67(2), pp 276-293 the effects of feeding cows with a blend of ammonium salts of valeric acid, isovaleric acid, 2-methylbutyric acid and isobutyric acid on production, reproduction and health of dairy cows. The blend appeared effective for increasing production of milk.

CA-A-1 184 416 describes a feed supplement composition for ruminant animals to increase milk production of cows, which composition comprises ammonium isobutyrate, ammonium valerate, ammonium isovalerate and ammonium 2-methylbutyrate.

Object of the present invention is to provide an animal feed that at least in part solves the problem of dysfunction of the gut as described hereinabove.

In a first aspect, this object is met by providing an animal feed suitable for feeding animals, including mammals, birds and fish, which animal feed comprises a C5 acid compound, wherein the dosage of said C5 acid compound in said animal feed is 0.025 wt.% by weight or higher, based on the total weight of said animal feed.

The inventors surprisingly found that C5 acid compounds have a positive effect on the barrier properties of the intestinal mucosa. Without wishing to be bound by theory, it is expected that C5 acid compounds strengthen the tight junctions in the intestinal epithelial cells, thereby increasing the barrier for paracellular transport. It was found that feeding animals C5 acid compounds both improves the feed conversion ratio and the health of animals. The presence of C5 acid compounds in animal feed is further expected to decrease the risk of poisoning of animals by ingested materials.

The C5 acid compound was found to improve the general condition of the animals. In particular it is believed that feeding the C5 acid compound in accordance with the present invention, results in improving the mucosal barrier properties, which in turn prevents the colonization of the gut by food borne pathogens, such as *Salmonella* and *Campylobacter.*

The term "C5 acid compounds" as used herein is defined as a compound chosen from the group consisting of C5 acids, salts of C5 acids, esters of C5 acids and combinations thereof. Preferably, ammonium and calcium ions are used as cations in salts of C5 acids, such as in ammonium valerate or calcium isovalerate. Esters of C5 acids are preferably formed with ethanol or methanol, *i.e*. methyl and ethyl esters of C5 acids. Examples of esters of C5 acids are ethyl valerate and butyl isovalerate.

The term "C5 acids" as used herein is defined as acids that comprise exactly five carbon atoms. C5 acids typically have the formula C₅H₁₀O₂. Examples of C5 acids are valeric acid (pentanoic acid), isovaleric acid (3-methylbutanoic acid) and 2-methylbutanoic acid. Preferably, the C5 acid compounds are based on valeric acid or isovaleric acid.

The C5 acid compounds can be of synthetic or natural origin. Preferably synthetic compounds are used, since this ensures constant quality of the product. Certain animal feeds may have a natural content of the C5 acid compounds used in the present invention, in particular if the animal feed has been subject to fermentation. These "natural" levels of C5 acid compounds are however generally much lower than 0.025 wt.%. In accordance with the present invention the levels of C5 acid compounds are adjusted to the required concentrations by adding C5 acid compounds, preferably of synthetic origin. Thus the present invention is also directed to a process for producing an animal feed, which process comprising a step of adding a C5 acid compound, preferably of synthetic origin to an animal feed, such that the total level of C5 acid compounds in said animal feed is 0.025 wt.% or higher, based on the total weight of said animal feed.

The feed conversion ratio (FCR) is a measure of an animal's efficiency in converting feed mass into increased body mass and can be defined as the mass of the food eaten divided by the body mass gain taken over a specified period of time.

A valerate, isovalerate, 2-methylbutyrate and butyrate are defined herein as a salt or ester of valeric acid, isovaleric acid, 2-methylbutanoic acid and butanoic acid respectively.

Preferably, the animal feed of the invention comprises one or more C5 acid compounds chosen from the group consisting of valeric acid, valerate, isovaleric acid, and isovalerate.

The animal feed may comprise a combination of different C5 acid compounds.

The amount of C5 acid compound in the animal feed of the invention is preferably more than 0.025 wt.% and more preferably not more than 1 wt.%, even more preferably 0.1-0.75 wt.%.

The animal feed of the invention may further comprise butyric acid (butanoic acid) or butyrate. Such a compound may in combination with a C5 acid compound have a synergistic effect on the barrier properties of the intestinal mucosa when provided in the animal feed of the invention.

The dosage of said butyric acid or butyrate in said animal feed is preferably 0.01 wt.% or higher, based on the total weight of said animal feed, more preferably 0.02 to 0.75 wt.%, even more preferably 0.025 to 0.15 wt%, even more preferably 0.03 to 0.1 wt.%.

The animal feed of the invention may be provided by enriching a basic animal feed in a C5 acid compound, such that a desired daily dosage is obtained. The desired dosage depends on several factors, such as the kind of animal and the age of the animal. It was found that the above-mentioned concentrations and preferred concentrations of the feed provide for a versatile animal feed that can be readily fed to animals.

The desired concentrations of C5 acid compound in the animal feed, required to obtain the suitable dosages of C5 acid compound, are most conveniently obtained by using a premix. Such a premix may comprise other dietary supplements and may be mixed with conventional animal feed to obtain the animal feed of the invention. A premix in accordance with the present invention may contain typically 1 to 50 wt.% C5 acid compound, but this depends mainly on the amount of premix that is to be used to provide the final feed composition. All amounts expressed in weight ratios in the present description and claims are calculated on a dry matter basis. The amount of premix used varies usually between 0.1 to 20%, preferably from 1 to 10% based on the total weight of the mixed feed.

A conventional animal feed can be used as a starting material for the animal feed of the present invention. The basis of such a feed is mainly determined by the animal to be fed and common considerations such as price and availability.

As mentioned, the feed of the present invention is usually further supplemented by other components, such as vitamins, minerals and amino acids.

A suitable vitamin to be added in accordance with the present invention is for instance vitamin E, which can be applied in amounts of typically 20 - 100 IU (international units) per kg feed.

A suitable mineral to be added in accordance with the present invention is for instance selenium, which can be applied in amounts of typically 0.1 - 0.5 mg per kg feed.

A suitable amino acids to be added in accordance with the present invention is for instance tryptophan, which can be applied in amounts of typically 10 to 30% relative to the total content of lysine present in the feed.

Other additives are for instance yeast products. Suitable yeast products to be added in accordance with the present invention are one or more of 1,3/1,6-glucan containing yeast products. These compounds can be applied in amounts of typically 50 to 5000 mg per kg feed..

The present invention is also directed to a method for improving the feed conversion ratio and/or health in animals, comprising feeding an animal C5 acid compound.

The animal feed and method according to the present invention may be applied to various animals, in particular mammals. Preferred mammals are those that are farming animals, *viz*. animals kept for production aspects like meat, milk and eggs, especially those selected from bovine species, equine species, porcine species, and ovine species. Also feeding to pet animals is envisaged. Particularly good results are obtained with monogastric animals, in particular pigs. Also good results are obtained with young animals. Young monogastric animals, in particular young pigs, are particularly preferred.

## Claims

1. Animal feed suitable for feeding mammals, birds and fish, comprising a C5 acid compound, wherein the dosage of said C5 acid compound in said animal feed is 0.025 wt.% or higher, based on the total weight of said animal feed.

2. Animal feed according to claim 1, wherein said C5 acid compound is chosen from the group consisting of valeric acid, valerate, isovaleric acid, isovalerate and combinations thereof.

3. Animal feed according to any of the previous claims, further comprising butyric acid, butyrate or both.

4. Animal feed according to claim 3, wherein the dosage of said butyric acid and/or butyrate in said animal feed is 0.025 wt.% or higher, based on the total weight of said animal feed.

5. Animal feed according to any of the previous claims, wherein said animal is a farming mammal selected from bovine species, porcine species, or ovine species.

6. Animal feed according to any of the previous claims, wherein said C5 acid compound is mainly added C5 acid compound, preferably more than 90 wt.%.

7. Animal feed according to the previous claim, wherein said added C5 acid compound is of synthetic origin.

8. Animal feed according to any of the previous claims, for use in a method for improving the physical condition of animals.

9. Animal feed according to the previous claim, for use in a method to treat a condition associated with disruption of tight junctions in intestinal epithelial cells, in particular a method to improve the barrier properties of the intestinal mucosa.

10. Animal feed according to the previous claim, in a method to improve the feed conversion ratio, to decrease the risk of poisoning of animals by ingested materials, or both.

11. Method for improving the feed conversion ratio and/or health in animals, comprising feeding an animal an animal feed according to any of claims 1-7.

12. Method of preparing an animal feed according to any of the claims 1-7, comprising the steps of providing a base feed, optionally adding one or more components selected from vitamins, minerals and amino acids, adding said C5 acid compound in an amount of 0.025 wt.% or higher, based on the final total weight of said animal feed and mixing of all ingredients.
